# NEUE EUROPÄISCHE PATENTSCHRIFT

(11) **EP 0 946 949 B2**
(45) Veröffentlichungstag und Bekanntmachung des Hinweises auf die Entscheidung über den Einspruch: **02.01.2008**
(45) Hinweis auf die Patenterteilung: 12.03.2003
(21) Anmeldenummer: 97952908.8
(22) Anmeldetag: 10.12.1997
(51) Int. Cl.: H01B 7/28, G02B 6/44

(54) **VERWENDUNG VON QUELLBARERN SCHMELZKLEBSTOFFEN**
USE OF SWELLABLE HOT-MELT ADHESIVES
UTILISATION DE COLLES THERMOFUSIBLES SUSCEPTIBLES DE GONFLEMENT

(30) Priorität: 18.12.1996 DE 19652762
(43) Veröffentlichungstag der Anmeldung: 06.10.1999
(73) Patentinhaber: Henkel Kommanditgesellschaft auf Aktien, 40191 Düsseldorf (DE)
(72) Erfinder: BUTTERBACH, Rüdiger, D-45219 Essen (DE); MAASSEN, Ulrike, D-41468 Neuss (DE); KOPANNIA, Siegfried, D-47809 Krefeld (DE); HEEMANN, Marcus, D-40225 Düsseldorf (DE)
(86) Internationale Anmeldenummer: PCT/EP1997/006887
(87) Internationale Veröffentlichungsnummer: WO 1998/027559

(56) Entgegenhaltungen:
- EP-A- 0 378 940
- EP-A- 0 439 277
- EP-A- 0 489 967
- EP-A- 0 685 855
- EP-A- 0 699 800
- WO-A-95/31188
- DE-A- 2 006 359
- US-A- 3 345 320
- US-A- 3 972 328
- US-A- 4 231 369
- US-A- 4 329 451
- US-A- 4 367 732
- US-A- 4 393 080
- US-A- 4 548 845
- US-A- 4 551 490
- US-A- 5 179 611
- DATABASE WPI Section Ch, Week 9030 Derwent Publications Ltd., London, GB; Class A25, AN 90-227963 XP002060703 & JP 02 155 954 A (NIPPON SHOKUBAI KAGAKU KOGYO CO LTD) , 15.Juni 1990
- DATABASE WPI Section Ch, Week 9030 Derwent Publications Ltd., London, GB; Class A14, AN 90-227962 XP002060704 & JP 02 155 953 A (NIPPON SHOKUBAI KAGAKU KOGYO CO LTD) , 15.Juni 1990
- DATABASE WPI Section Ch, Week 8613 Derwent Publications Ltd., London, GB; Class A14, AN 86-084988 XP002060705 & JP 61 031 450 A (NIPPON SHOKUBAI KAGAKU KOGYO CO LTD) , 13.Februar 1986
- Product Data Sheet from Eastman Chemical Company
- Ullmann's Encyclopedia of Industrial Chemistry, online ed., "Gelatin", 2.2 Physical Properties
- G. Habenicht, "Kleben, Grunlagen, Technologien, Anwendungen", 4. Auflage, S. 144 "Harz"
- G. Habenicht, "Kleben, Grundlagen, Technologien, Anwendungen", 4. Auflage, S. 198 "Schmelzklebstoff"
- ROEMPP Online, "Ethylcellulose"
- Roemppp Chemie Lexikon, 9. Auflage 1990, Seite 1737 "Harze"

## Beschreibung

Die Erfindung betrifft die Verwendung eines mit Wasser quellbaren Schmelzklebstoff auf der Basis einer nicht-wasserlöslichen Komponente, einer in Wasser löslichen oder dispergierbaren Komponente und einer in Wasser quellbaren Komponente. Die Erfindung betrifft weiterhin die Verwendung dieses Schmelzklebstoffes zur Herstellung von wasserdichten Konstruktionen, insbesondere zur Herstellung von längswasserdichten Kabelkonstruktionen.

Bei einer Vielzahl von Konstruktionen wie z.B. Rohrleitungen und insbesondere bei Kabeln, die im Erdreich oder unter Wasser verlegt sind. besteht die Notwendigkeit, diese Konstruktionen an den Übergangs- bzw. Verbindungsstellen oder bei der Beschädigung von deren äußerer Hülle gegen eindringendes Wasser zu schützen. Insbesondere Energie- und/oder Telekommunikationskabel sind langlebige Investitionsgüter, deren Betriebssicherheit über einen sehr langen Lebenszeitraum gewährleistet werden muss. Bei Schäden in der Außenisolierung und/oder an fehlerhaften Übergangsstellen dringt Wasser in das innere derartiger Kabelkonstruktionen ein, diese Wassereinbrüche können zu erheblichen Beschädigungen der Kabel führen. Es kann dabei zu einer schnellen Ausbreitung des Wassers entlang der Kabellängsachse kommen und ein derartig geschädigtes Kabel auf langen Strecken unbrauchbar machen.

Zur Verhinderung des Eindringens von Wasser in derartige Konstruktionen verwendet man bereits seit geraumer Zeit wasserquellbare Dichtungsmaterialien bzw. Dichtungskonstruktionen. Die JP-A-58-215334 (83) beschreibt in allgemeiner Form hitzehärtbare Dichtungsmaterialien auf der Basis von Kautschuken und einem wasserquellbaren Polyurethanharz auf der Basis von Ethylenoxidpropylenoxidcopolymeren.

Gemäß Stand der Technik werden zur Herstellung längswasserdichter Energie- bzw. Telekommunikationskabel mehrschichtige Dichtungssysteme eingesetzt. So beschreiben W. Schäfer und P. Graber in "Draht und Kabelpanorama", Mail Juni/Juli 1988, Seite 64 bis 68 Quellfließstoffe aus einer äußerst homogenen Quellschicht. bestehend aus einer Mischung eines synthetischen Hydrogelbildners (Quellpulver) mit chemisch reinem Cellulosepulp als Füllmittel und einer Trägerschicht mit hoher mechanischer Festigkeit aus Polyesterfasern mit Polyesterfäden als zusätzlichem Verstärkungselement. Diese beiden Schichten werden mittels hohem Druck und Temperatur thermisch miteinander verbunden ohne Verwendung niedrigschmelzender Thermoplaste. Aus derartigen Fließstoffen oder Garnen werden dann quellfähige Bandagen gefertigt, die um das Aderbündel ggf. in Kombination mit einem Kunststoffinnenmantel bandagiert werden.

Die US-A-5 179 611 lehrt eine mit Wasser quellbare thermoplastische Masse aus Kabelabdichtung. Die Bestandteile dieses Masse werden stets im einem Lösungsmittel gelöst oder dispergiert und dann aufgetragen. Schmelzklebstoffe werden nicht erwähnt.

Die EP-A-188959 beschreibt ein mehrschichtiges Abdichtband bestehend aus einem Träger aus Papier. textilen Materialien oder Kunststoffen, der mit einer Schicht aus einem wasserquellfähigen polymeren Pulver und einem wasserlöslichen Bindemittel sowie ggf. einem Tensid beschichtet ist.

Die US-A-5020875 beschreibt Kabelkonstruktionen, bei denen die Schicht, die den Wassereinbruch durch Quellung verhindern soll, aus einem mehrschichtigen Laminat besteht. Dieses Laminat besteht aus zwei Trägerbändern aus hydrophobem Material wie z.B. Polyester. Zwischen diese beiden Trägerbänder ist ein wasserquellbares Polymer oder Copolymer vom Typ der Superabsorber eingelagert.

Die US-A-5188883 beschreibt eine mehrschichtige Verbundstruktur aus einem Metallband als einer Schicht und einer Schicht eines quellfähigen Wasser-blockierenden Materials, wobei die beiden Schichten und Oberflächen mit Hilfe eines Klebstoffes verbunden werden.

Die Verwendung der oben genannten mehrschichtigen Verbundmaterialien zur Herstellung von längswasserdichten Kabelkonstruktionen ist wegen der Vielzahl der damit verbundenen Arbeitsschritte aufwendig und kostenintensiv. Es bestand daher Bedarf. Produkte bereitzustellen, die eine einfachere Herstellung längswasserdichter Kabelkonstruktionen ermöglicht.

Erfindungsgemäß erfolgt die Lösung dieser Aufgabe durch die Verwendung eines mit Wasser quellbaren Schmelzklebstoffs der im wesentlichen aus drei Komponenten besteht:
A.) Einer nicht-wasserlöslichen Komponente enthaltend mindestens ein in Wasser unlösliches Polymer oder Copolymer und mindestens ein weiteres im wesentlichen in Wasser unlösliches Harz, mit einer von O verschiedenen Verseifungszahl
B.) einer in Wasser löslichen oder in Wasser dispergierbaren Komponente, wobei diese Komponente mindestens ein in Wasser lösliches oder in Wasser dispergierbares Oligomer und/oder Polymer bzw. Copolymer enthält,
C.) einer in Wasser quellbaren Komponente, die aus einem wasserquellbaren Homo- bzw. Copolymer besteht,
wobei die Komponenten A, B und C homogen durchmischt sind als Schmelzkleb- und Richtstoff oder Beschichtungsmittel zur Herstellung wasserdichter Konstruktion. Als "homogen durchmischt" im Sinne dieser Erfindung soll verstanden werden, dass die Matrix der Masse keine makroskopischen Inhomogenitäten besitzt. Dies bedeutet nicht, dass im mikroskopischen Bereich unterschiedliche Phasen bestehend aus der nicht-wasserlöslichen Komponente und der wasserlöslichen Komponente bzw. in Wasser quellbaren Komponente bestehen. Insbesondere soll homogen durchmischt nicht bedeuten, dass das in Wasser quellbare Homo- bzw. Copolymer der Komponente C in einer oder beiden anderen Komponenten molekular gelöst vorliegen soll.

Die mit Wasser quellbaren Schmelzklebstoffe stellen also Schmelzklebstoffe dar, die insbesondere in Kabelkonstruktionen eingesetzt werden können

Als in Wasser unlösliches Homo- bzw. Copolymer der Komponente A können dabei grundsätzlich alle an sich für den Einsatz in Schmelzklebstoffen bekannten thermoplastischen Polymeren eingesetzt werden, beispielhaft erwähnt seien Polyamide, Copolyamide, Polyaminoamide, Polyester, Polyacrylate, Polymethacrylate, Polyolefine sowie insbesondere Ethylen-Vinylacetat-Copolymere oder Mischungen eines oder mehrerer der vorgenannten Polymere.

Als weiteres Harz der Komponente A lassen sich mit Ausnahme der reinen Kohlenwasserstoffharze alle an sich bekannten klebrigmachenden Harze zur Erhöhung der Klebrigkeit der Schmelze einsetzen. Die erfindungsgemäß einzusetzenden Harze haben daher eine von 0 verschiedene Verseifungszahl. Insbesondere eignen sich hierfür die diversen Kolophonium-Derivate, d.h., insbesondere die Harzester der Abietinsäure, geeignet sind jedoch auch andere Polyterpene sowie Terpenphenolharze.

Für die Bestandteile der Komponente B eignen sich eine Vielzahl von in Wasser löslichen oder in Wasser dispergierbaren Oligomeren oder Homo- bzw. Copolymeren. Beispielhaft erwähnt seien Polyethylenglykole im Molekulargewichtsbereich zwischen 400 und 20000, Polyvinylmethylether, Polyvinylpyrrolidon, Copolymere des Vinylmethylethers oder des Vinylpyrrolidons, Polyvinylalkohole, wasserlösliche oder wasserdispergierbare Polyester oder Copolyester, wasserlösliche oder wasserdispergierbare Acrylatpolymere.

Die in Wasser quellbare Komponente C kann durch alle diejenigen Homo- und/oder Copolymeren gebildet werden, die als hydrophile Materialien große Mengen an Wasser absorbieren und auch unter Druck festzuhalten vermögen. ohne dass sie sofort im Wasser aufgelöst werden. Derartige hydrophile Materialien sind auch als "Superabsorber" bekannt. Beispielhaft genannt seien hier Pfropfcopolymere aus Stärke oder Cellulose mit Acrylnitril, Acrylsäure oder Acrylamid, Carboxymethylcellulose, Maleinsäureanhydrid-Poly-α-olefincopolymere, Polyacrylamid. Polyacrylsäure sowie Salze der Polyacrylsäure sowie ggf. Copolymere der Acrylsäure oder des Acrylamids mit Acrylatestern.

Je nach erfindungsgemäßen Einsatz der Schmelzklebstoffe können diese oberflächenklebrige Eigenschaften haben oder klebfreie Oberflächen für sogenannte "blockfreie" Versionen. Die letztgenannten Zusammensetzungen enthalten dabei an sich bekannte Wachszusätze, insbesondere Bisstearamidwachse. Weiterhin können beide Versionen der erfindungsgemäßen Schmelzklebstoffe an sich bekannte handelsübliche Stabilisierungsmittel enthalten, die eine Temperaturstabilität der Formulierungen gewährleisten.

Besonders bevorzugte oberflächenklebrige quellbare Schmelzklebstoffzusammensetzungen enthalten die folgenden Bestandteile:
15 bis 45 Gew.% Harzester oder Terpenphenolharze
15 bis 40 Gew.% thermoplastisches Copolymer, insbesondere Ethylenvinylacetatcopolymere,
5 bis 20 Gew.% Acrylatcopolymere
5 bis 30 Gew.% Polyethylenglykole,
5 bis 15 Gew.% Polyvinylethylether, wasserlösliche oder wasserdispergierbare Acrylatpolymere oder wasserlösliche oder wasserdispergierbare Copolyester
15 bis 50 Gew.% pulverförmiges Polyacrylsäuresalz, Polyacrylamid oder ähnliche pulverförmige Superabsorber
0.2 bis 2,0 Gew.% handelsübliche Stabilisierungsmittel.

Besonders bevorzugte quellfähige Schmelzklebstoffformulierungen in der blockfreien Version enthalten:
15 bis 45 Gew.% Harzester, Terpenphenolharze oder dergleichen
15 bis 40 Gew.% thermoplastisches (Co)polymer, insbesondere Ethylvinylacetatcopolymer
5 bis 25 Gew.% Polyethylenglykole
15 bis 50 Gew.% pulverförmiger Superabsorber, insbesondere Polyacrylsäuresalz
0,2 bis 2.0 Gew.% Stabilisierungsmittel
0.5 bis 5,0 Gew.% Wachse, insbesondere Ethylen Bisstearamid.

Diese erfindungsgemäße Verwendung der wasserquellbaren Schmelzklebstoffe eignen sich z.B. als Beschichtung von Metallfolien oder glasfaserverstärkten Verstärkungselementen aus Kunststoff in der Kabelkonstruktion. Eine besonders bevorzugte Anwendung ist z.B. die direkte Beschichtung des zentralen Verstärkungselementes von Lichtwellenleiterkabeln.

Dieses Zentralelement kann mit der nicht-oberflächenklebrigen Version des Klebstoffes beschichtet werden und anschließend aufgerollt und zwischengelagert werden. In üblichen Lichtwellenleiterkabeln sind konzentrisch um dieses Zentralelement die einzelnen Lichtwellenleiter angeordnet. Nach Reaktivierung der nicht-oberflächenklebrigen Version des Klebstoffes auf dem Zentralelement können diese Lichtwellenleiter direkt auf dem Zentralelement klebend fixiert werden und können anschließend weitere Fertigungsschritte durchlaufen. Ggf. können die Kunststoffröhrchen (tubes) die den/die Lichtwellenleiter enthalten. ebenfalls auf der Außenseite mit den erfindungsgemäßen Schmelzklebstoff beschichtet sein. Eine nach gängigem Stand der Technik notwendige Umhüllung der Lichtwellenleiter mit einem wasserquellfähigen mehrschichtigen Klebeband oder mehrschichtigem Fließmaterial und zusätzlicher Längswasserabdichtung der Hohlräume zwischen dem Zentralelement und den tubes mit einem Fett (Petrojelly) kann bei der erfindungsgemäßen Verwendung der Schmelzklebstoffe entfallen. Man kann in der Kabelkonstruktion die konstruktionsbedingten Hohlräume belassen, da der wasserquellbare Schmelzklebstoff bei Eindringen vom Wasser diese Hohlräume aufgrund des Quellvorganges vollständig ausfüllt und damit eine zuverlässige Längswasserabdichtung gewährleistet. Diese Konstruktionsart ergibt vereinfachte Verbindungstechnik, die Möglichkeit zu fettfreiem Arbeiten sowie eine signifikante Gewichtserersparnis der Kabelkonstruktion. Außerdem ist eine höhere Produktionsgeschwindigkeit möglich im Vergleich zur Verarbeitung von Quellfließen.

Bei der erfindungsgemäßen Verwendung der oberflächenklebrigen Version des Schmelzklebstoffes wird dieser direkt in der Kabelkonstruktionslinie auf das Zentralelement und/oder die Lichtwellenleiter aufgetragen, eine Reaktivierung des Schmelzklebstoffes ist in diesem Fall nicht notwendig.

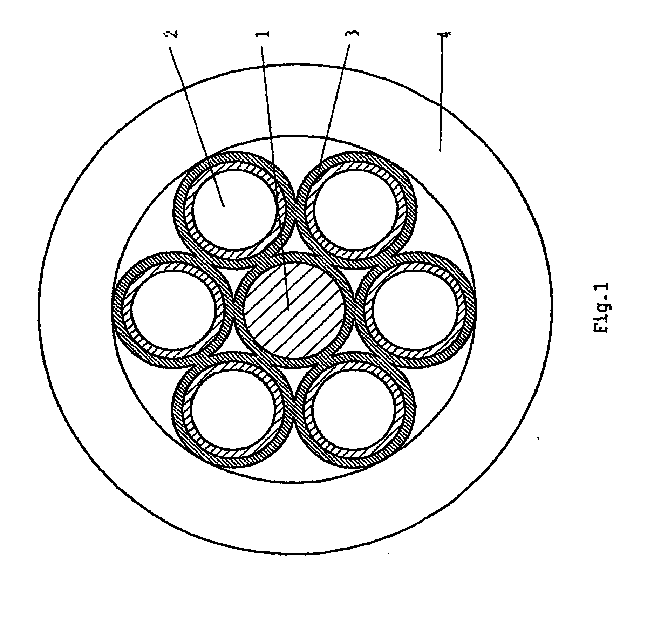

Die Figur 1 zeigt in schematischer Weise den Querschnitt durch ein Lichtwellenleiterkabel unter erfindungsgemäße Verwendung der quellbaren Schmelzklebstoffe. Das Zentralelement **1** ist von mehreren tubes **2** mit Lichtwellenleitern umgeben. Dargestellt wurde eine Umhüllung **3** der Lichtwellenleiter mit dem quellbaren Schmelzklebstoff. Den Abschluss des Kabels nach außen bildet der Kabelmantel **4**.

Die wasserquellbaren Schmelzklebstoffe werden wie folgt hergestellt:

Harzester, Ethylenvinylacetat und Acrylatcopolymere werden bei 140 bis 160°C aufgeschmolzen und homogenisiert. Anschließend wird das oder die Polydiole zugegeben und homogenisiert. Danach wird der Polyvinylmethylether und das Stabilisierungsmittel zugegeben und homogenisiert. Zuletzt wird das pulverförmige Polyacrylsäuresalz eingearbeitet und homogenisiert. Bei den blockfreien Versionen wird danach das Wachs zuletzt zugegeben und noch einmal homogenisiert. Anschließend wird die homogene Schmelze in die entsprechenden Verpackungseinheiten abgelassen und auf Raumtemperatur abgekühlt.

Zur praxisnahen Überprüfung der Funktionsfähigkeit des wasserquellbaren Schmelzklebstoffes wird folgender Test durchgeführt:

Eine 0,1 mm starke Polyesterfolie wird beidseitig mit dem Schmelzklebstoff in einer Schicht von 0,2 mm bis maximal 0,4 mm pro Seite beschichtet. Dabei darf die gesamte Schichtdicke der beschichteten Folie 1 mm nicht übersteigen. Diese beidseitig beschichtete Folie wird um einen Stab aus Teflon (200 ml lang, 19 mm Durchmesser) gewickelt, wobei sich eine maximale Überlappung von 2 mm an der Längsnaht ergeben darf. Ein Glasrohr mit einem Innendurchmesser von 23 mm und einer Länge von 350 mm wird an seinem unteren Auslauf mit einem lockeren Wattepfropf versehen, anschließend wird der mit der beschichteten Folie umwickelte Teflonstab in das Zentrum des Glasrohres gegeben und das obere Ende des senkrecht stehenden Glasrohres mit einem weiteren lockeren Wattepfropfen verschlossen. Oberhalb des Glasrohres ist ein Tropftrichter, enthaltend 250 ml entsalztes Wasser, angebracht.

Läßt man jetzt das Wasser langsam tropfenweise von oben in das Glasrohr tropfen, so quillt der Schmelzklebstoff innerhalb kurzer Zeit derartig auf, dass nur während einer kurzen Anfangsphase wenige ml Wasser unten aus dem Glasrohr ausfließen. Danach kann kein weiteres Wasser mehr durchdringen.

Der für obigen Praxistest erfindungsgemäß verwendete wasserquellbare Schmelzklebstoff hatte die folgende Zusammensetzung:
19.5 Teile Pentaerytritester der Abietinsäure
29.8 Teile Ethylenvinylacetat
10.0 Teile eines Copolymers aus Ethylen, Acrylsäure, Vinylacetat und Vinylalkohol
0.2 Teile sterisch gehindertes Phenol als Antioxidans
19.5 Teile Polyethylenglykol, Molekulargewicht 12000
20.0 Teile Natriumsalz der Polyacrylsäure (Quellmittel)
1,0 Teile Ethylenbisstearamid (Antiblockmittel).

## Patentansprüche

1. Verwendung eines mit Wasser quellbaren Schmelzklebstoffs auf der Basis
A.) einer nicht wasserlöslichen Komponente
B.) einer in Wasser löslichen oder dispergierbaren Komponente und
C.) einer in Wasser quellbaren Komponente, **dadurch gekennzeichnet, dass** die Komponente A mindestens ein in Wasser unlösliches (Co)polymer und mindestens ein weiteres Harz mit einer von O verschiedenen Verseifungszahl enthält, die Komponente B mindestens ein in Wasser lösliches oder dispergierbares Oligomer und/oder (Co)polymer enthält und die Komponente C aus einem wasserquellbaren (Co)polymer besteht, wobei die Komponenten A, B und C homogen durchmischt sind, als Schmelzkleb- und Dichtstoff oder Beschichtungsmittel zur Herstellung wasserdichter Konstruktionen.

2. Verwendung gemäß Anspruch 1, **dadurch gekennzeichnet, dass** die Komponente A, mindestens ein thermoplastisches (Co)polymer sowie ggf. klebrigmachende Zusätze enthält.

3. Verwendung gemäß Anspruch 1, **dadurch gekennzeichnet, dass** die Komponente A ein oder mehrere Harze mit einer von O verschiedenen Verseifungszahl, mindestens ein thermoplastisches (Co)polymer sowie die Klebrigkeit reduzierende Zusätze enthält.

4. Verwendung gemäß Anspruch 1 bis 3, **dadurch gekennzeichnet, dass** das in Wasser quellbare (Co)polymer der Komponente C ein Superabsorber aus der Gruppe der Polyacrylsäure, Polyacrylsäuresalze, Polyacrylamid oder deren Copolymere, ggf. mit Acrylnitril, oder Pfropfpolymere bzw. Copolymere der vorgenannten mit Stärke oder Cellulose ist.

5. Verwendung gemäß Anspruch 1 bis 4, **dadurch gekennzeichnet, dass** das wasserlösliche oder wasserdispergierbare Oligomer/(Co)polymer der Komponente B ausgewählt wird aus der Gruppe gebildet aus Polyethylenglykol, Polyvinylmethylether, Polyvinylpyrrolidon, wasserlösliche oder wasserdispergierbare Polyester oder Copolyester, wasserlösliche oder wasserdispergierbare Acrylatpolymere.

6. Verwendung des mit Wasser quellbaren Schmelzklebstoff gemäß mindestens einem der vorhergehenden Ansprüche zur Herstellung längswasserdichter Kabelkonstruktionen.

## Claims

1. Use of a water-swellable hotmelt adhesive based on
A.) a water-insoluble component,
B.) a water-soluble or water-dispersible component and
C.) a water-swellable component, **characterized in that** component A comprises at least one water-insoluble (co)polymer and at least one resin having a saponification number different from 0, component B comprises at least one water-soluble or water-dispersible oligomer and/or (co)polymer, and component C is composed of a water-swellable (co)polymer, components A, B and C being in homogeneously mixed form, as a hotmelt adhesive and sealant or coating composition for the production of watertight constructions.

2. Use according to Claim 1, **characterized in that** component A comprises at least one thermoplastic (co)polymer and also, if desired, tackifying additives.

3. Use according to Claim 1, **characterized in that** component A comprises one or more resins having a saponification number different from 0, at least one thermoplastic (co)polymer, and tack-reducing additives.

4. Use according to Claim 1 to 3, **characterized in that** the water-swellable (co)polymer of component C is a superabsorbent from the group of polyacrylic acid, salts of polyacrylic acid, polyacrylamide or copolymers thereof, if desired with acrylonitrile, or graft polymers and/or copolymers of the aforementioned with starch or cellulose.

5. Use according to Claim 1 to 4, **characterized in that** the water-soluble or water-dispersible oligomer/(co)polymer of component B is selected from the group consisting of polyethylene glycol, polyvinyl methyl ether, polyvinylpyrrolidone, water-soluble or water-dispersible polyesters or copolyesters, and water-soluble or water-dispersible acrylate polymers.

6. Use of the water-swellable thermoplastic composition according to at least one of the preceding claims for the production of longitudinally watertight cable constructions.

## Revendications

1. Utilisation d'une colle susceptible de gonfler dans l'eau à base
a) A d'un composant non soluble dans l'eau,
b) d'un composant soluble ou dispersible dans l'eau, et
c) d'un composant susceptible de gonfler dans l'eau,
**caractérisée en ce que**
le composant A contient au moins un (co)polymère insoluble dans l'eau et au moins une autre résine ayant un indice de saporification différent de zéro, le composant B renferme au moins un oligomère et/ou un (co)polymère soluble(s) ou dispersible(s) dans l'eau et le composant C est constitué d'un (co)polymére susceptible de gonfler dans l'eau, les composants A, B et C étant mélangés intimement de manière homogène, comme colle et matière d'étanchement thermofusible ou comme agent d'enduction pour la réalisation de constructions étanches à l'eau.

2. Utilisation selon la revendication 1,
**caractérisée en ce que**
le composant A contient, au moins un (co)polymère thermoplastique et le cas échéant, des additifs rendant adhésifs.

3. Utilisation selon la revendication 1,
**caractérisée en ce que**
le composant A contient une ou plusieurs résines ayant un indice de saponification différent de zéro, au moins un (co)polymère thermoplastique et des additifs réduisant l'adhésivité.

4. Utilisation selon les revendications 1 à 3,
**caractérisée en ce que**
le (co)polymère du composant C susceptible de gonfler dans l'eau est un superabsorbeur appartenant au groupe de l'acide polyacrylique, des sels d'acide polyacrylique, du polyacrylamide ou des copolymères de ceux-ci, le cas échéant avec l'acrylonitrile, ou des polymères greffés ou des copolymères des composés précités avec de l'amidon ou de la cellulose.

5. Utilisation selon les revendications 1 à 4,
**caractérisée en ce que**
l'oligomère/(co)polymère du composant B soluble ou dispersible dans l'eau est sélectionné parmi le groupe formé du polyéthylèneglycol, du polyvinylméthyléther, de la polyvinylpyrrolidone, des polyesters ou des copolyesters solubles ou dispersibles dans l'eau.

6. Utilisation de la colle thermofusible susceptible de gonfler dans l'eau selon au moins l'une des revendications précédentes, pour la réalisation de constructions de câbles étanches à l'eau en sens longitudinal.
